# EUROPÄISCHE PATENTANMELDUNG

(11) **EP 1 197 367 A2**
(43) Veröffentlichungstag der Anmeldung: **17.04.2002**
(21) Anmeldenummer: 01124673.3
(22) Anmeldetag: 09.10.2001
(51) Int. Cl.: B60J 5/04, B62D 33/067, B62D 33/06

(54) **Fahrerkabinentür eines Fahrzeugs die an ihrem unteren Ende geknöpft und/oder mit einem hochklappbaren Abschnitt versehen ist**

(30) Priorität: 12.10.2000 DE 10050550
(71) Anmelder: STILL GMBH, D-22113 Hamburg (DE)
(72) Erfinder: Schröder, Werner-Georg, 63762 Grossostheim (DE)
(74) Vertreter: Kasseckert, Rainer

(57) **Zusammenfassung**

Ein Fahrzeug weist eine Fahrerkabine (2) auf, die auf einem Fahrzeugrahmen (1) angeordnet ist. Der Fahrerkabine (2) ist durch eine Tür (6) verschließbar, die an einer hinteren Vertikalstrebe (5) befestigt ist. Im Schwenkbereich der Tür (6) ist der Fahrzeugrahmen (1) zumindest teilweise in vertikaler Richtung nach oben versetzt und ragt zumindest teilweise horizontal über die Kontur der Fahrerkabine (2) hinaus. Um einen Betrieb des Fahrzeugs mit in Öffnungsstellung befindlicher Tür (6), ist erfindungsgemäß die Tür (6) an ihrem unteren Ende nach innen gekröpft und/oder mit einem hochklappbaren Abschnitt (6a) versehen. In der Öffnungsposition der Tür (6) ist dann der obere Teil der Tür (6) im Bereich des hinteren Öffnungsabschnitts zum Anschlag gegen die Fahrerkabine (2) bringbar. Die Fahrerkabine (2) kann um eine horizontale Kippachse (8) schwenkbar sein, die im Bereich des hinteren Öffnungsabschnitts (3b) unten quer angeordnet ist. Die Tür (6) ragt in der Öffnungsstellung seitlich nicht aus der Kontur des Fahrzeugs heraus.

## Beschreibung

Die Erfindung betrifft ein Fahrzeug mit einer auf einem Fahrzeugrahmen angeordneten Fahrerkabine, die eine durch eine Tür verschließbare seitliche Öffnung aufweist, wobei die Tür an einer hinteren Vertikalstrebe befestigt und zum Öffnen gegen den Uhrzeigersinn nach außen schwenkbar ist und wobei der Fahrzeugrahmen in einem einen Öffnungswinkel von 90 Grad übersteigenden Schwenkbereich der Tür - in Bezug auf die Vertikalposition des untersten Türabschnittes in Schließposition - zumindest teilweise in vertikaler Richtung nach oben versetzt ist und zumindest teilweise horizontal über die Kontur der Fahrerkabine hinausragt.

Derartige Fahrzeuge sind beispielsweise als Gegengewichts-Gabelstapler bekannt. Je nach Gestaltung der Fahrerkabine und des Fahrzeugrahmens ist es möglich, dass die Tür in ihrer Öffnungsposition seitlich deutlich aus der Kontur des Fahrzeugs herausragt, also schräg nach hinten gerichtet sind. Verursacht wird dies durch den Fahrzeugrahmen, der in diesem Bereich nach hinten ansteigt und horizontal über die Kontur der Fahrerkabine nach außen ragt, so dass die Tür dort zum Anschlag am Fahrzeugrahmen kommt. Ein Betrieb des Fahrzeugs in diesem Zustand ist problematisch, weil die Sicht nach hinten verschlechtert und die Fahrzeugbreite durch die nach außen geöffnete, schräg abstehende Tür vergrößert ist.

Der vorliegenden Erfindung liegt die Aufgabe zu Grunde, mit geringem Aufwand ein Fahrzeug der eingangs genannten Art zur Verfügung zu stellen, mit dem ein Betrieb mit in Öffnungsstellung befindlicher Tür ohne wesentliche Beeinträchtigungen möglich ist.

Diese Aufgabe wird erfindungsgemäß dadurch gelöst, dass die Tür an ihrem unteren Ende nach innen gekröpft und/oder mit einem hochklappbaren Abschnitt versehen ist.

Durch die Erfindung kann die Tür um 180 Grad (oder annähernd 180 Grad) nach außen geschwenkt werden, ohne vorzeitig am Fahrzeugrahmen anzuschlagen. In dieser Stellung ist ein Betrieb mit offener Tür ohne Probleme möglich, da sich die Fahrzeugbreite und die Sichtverhältnisse durch die nach außen geschwenkte Tür praktisch nicht ändern.

Gemäß einer vorteilhaften Ausgestaltung der Erfindung ist die seitliche Öffnung der Fahrerkabine durch die Vertikalstrebe in einen vorderen und einen hinteren Öffnungsabschnitt unterteilt, wobei der vordere Öffnungsabschnitt durch die an der Vertikalstrebe angeschlagene Tür verschließbar und der hintere Öffnungsabschnitt durch ein Fächenelement abgedeckt ist und wobei in der Öffnungsposition der Tür der obere Teil der Tür im Bereich des hinteren Öffnungsabschnitts zum Anschlag gegen die Fahrerkabine bringbar ist.

Sofern die Fahrerkabine um eine horizontale Kippachse schwenkbar ist, die im Bereich des hinteren Öffnungsabschnitts unten quer angeordnet ist, ergibt sich beim Kippen einer solchen Fahrerkabine der Vorteil, dass der Kippvorgang erleichtert wird, wenn sich die Tür in Öffnungsstellung befindet. Die zum Kippen erforderliche Kraft ist dabei aufgrund des in Richtung der Kippachse verschobenen Schwerpunkts der Fahrerkabine verringert.

Gemäß einer vorteilhaften Ausgestaltung der Erfindung ist die Vertikalstrebe mittels Schraubverbindungen an der Fahrerkabine befestigt. Dadurch ist es ohne strukturelle Änderungen an der Fahrerkabine möglich, je nach Verwendungszweck eine die vollständige seitliche Öffnung abdeckende Tür oder eine nur den vorderen Öffnungsabschnitt, also den Ein- und Ausstiegsbereich abdeckende Tür an derselben Fahrerkabine anzubringen.

Besonders günstig ist eine Anordnung, bei der die Tür in der Öffnungsstellung seitlich nicht aus der Kontur des Fahrzeugs herausragt.

Weitere Vorteile und Einzelheiten der Erfindung werden anhand des in den schematischen Figuren dargestellten Ausführungsbeispieles näher erläutert. Dabei zeigt
- Figur 1: einen Ausschnitt aus einem erfindungsgemäßen Fahrzeug in perspektivischer Ansicht und
- Figur 2: eine Seitenansicht des Fahrzeugs nach Figur 1.

Das erfindungsgemäße Fahrzeug ist im vorliegenden Ausführungsbeispiel als Flurförderzeug ausgebildet und weist einen Fahrzeugrahmen 1 und eine darauf angeordnete Fahrerkabine 2 auf.

Die Fahrerkabine 2 weist mindestens eine seitliche Öffnung 3 auf, durch die ein Fahrer ein- und aussteigen kann. Selbstverständlich ist es auch möglich, wie im Ausführungsbeispiel gezeigt, eine zweite Öffnung 4 auf der gegenüberliegenden Seite der Fahrerkabine 2 anzuordnen.

In der Öffnung 3 ist annähernd mittig eine Vertikalstrebe 5 angeordnet, die die Öffnung 3 in einen vorderen Öffnungsabschnitt und einen hinteren Öffnungsabschnitt unterteilt. Die Vertikalstrebe 5 kann - wie im vorliegenden Ausführungsbeispiel gezeigt - etwas zur Vertikalen geneigt angeordnet sein. An der Vertikalstrebe 5 ist eine Tür 6 angeschlagen, d..h. schwenkbar befestigt, durch die der vordere Öffnungsabschnitt verschließbar ist. Der hintere Öffnungsabschnitt wird durch ein Flächenelement 7 abgedeckt.

Sowohl die Tür 6 als auch das Flächenelement 7 sind mit Fenstern versehen. Diese können im Falle der Tür 6 beispielsweise als Schiebe- oder Klappfenster und im Falle des Flächenelements 7 als Drehfenster ausgebildet sein.

Der vordere Öffnungsabschnitt ist so bemessen, dass der Fahrer bequem ein- und aussteigen kann. Andererseits ist die Unterteilung so angeordnet, dass die an der Vertikalstrebe 5 angeschlagene Tür 6 in Öffnungsposition nicht aus der Kontur des Fahrzeugs nach hinten herausragt.

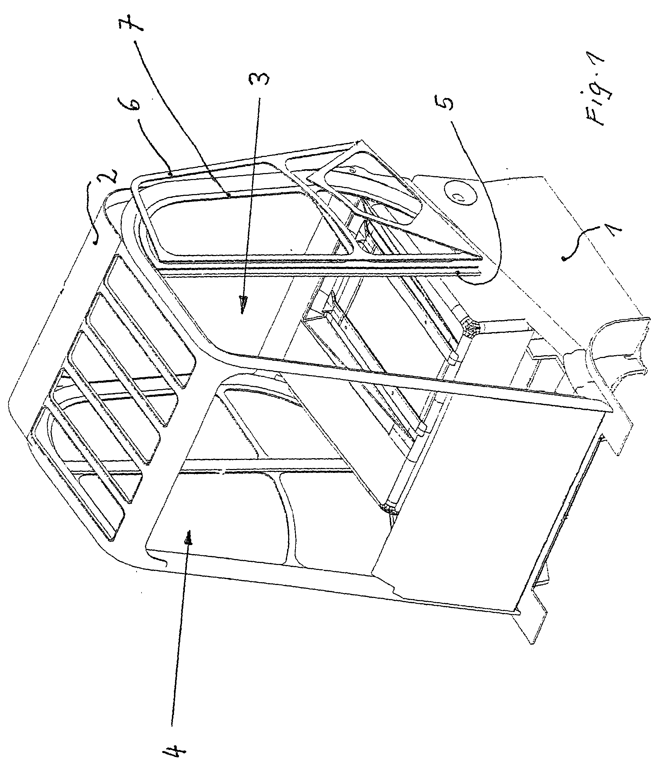

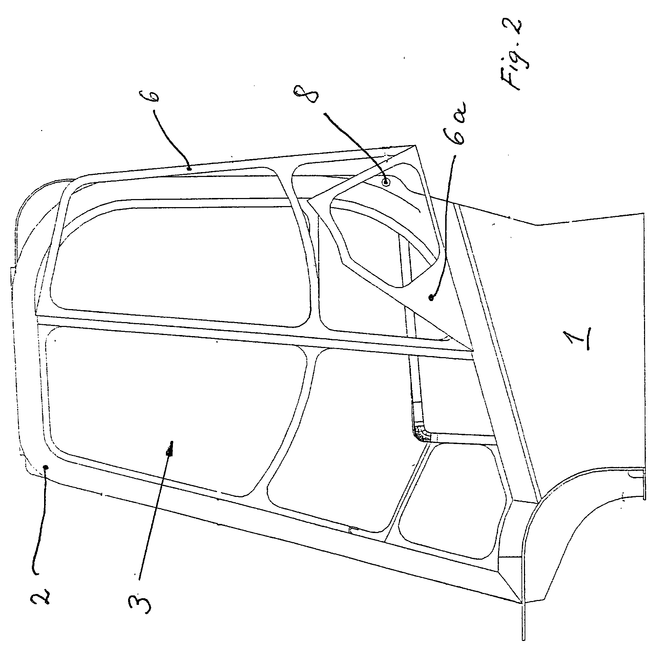

Die Fahrerkabine 2 ist - in der Seitenansicht betrachtet - keilförmig (siehe Fig. 2) ausgebildet. Dies bedeutet, dass der Fahrzeugrahmen 1 in Richtung zur Heckseite des Fahrzeugs in vertikaler Richtung nach oben zunehmend versetzt ist. Der Fahrzeugrahmen 1 ragt ferner horizontal über die Kontur der aufgesetzten Fahrerkabine 2 hinaus (erkennbar in Fig. 1).

Damit die Tür 6 in Öffnungsstellung nicht mit ihrem unteren Teil gegen den Fahrzeugrahmen 1 anschlägt und dadurch seitlich weit aus der Kontur der Fahrerkabine 2 heraussteht, ist sie mit einem hochklappbaren Abschnitt 6a versehen. Wäre dieser Abschnitt 6a nicht vorhanden, so würde der Öffnungswinkel der Tür 6 durch den Fahrzeugrahmen 1 begrenzt werden und zwar abhängig davon, wie weit der Fahrzeugrahmen 1 horizontal über die Kontur der Fahrerkabine 2 hinausragt.

Zusätzlich zum hochklappbaren Abschnitt 6a der Tür 6 oder alternativ dazu ist es auch möglich, die Tür in diesem Bereich nach innen zu kröpfen. In jedem Fall kann die Tür 6 soweit aufgeklappt werden, dass sie mit ihrem oberen Teil an der Fahrerkabine 2 zur Anlage kommt. Praktisch entspricht dies einem Öffnungswinkel von 180 Grad. Die geöffnete Tür 6 ragt dabei seitlich nicht oder nur unwesentlich über die Kontur des Fahrzeugs hinaus.

Das Fahrzeug kann infolgedessen mit geöffneter Tür 6 betrieben werden, ohne dass sich wesentliche Nachteile ergeben. Die Fahrzeugbreite und die Sichtverhältnisse nach hinten bleiben bei vollständig geöffneter Tür 6 im wesentlichen unverändert.

Die Fahrerkabine 1 kann um eine heckseitig horizontal quer angeordnete Kippachse 8 schwenkbar sein. In diesem Fall ist es zweckmäßig, vor dem Kippen die Tür 6 in Öffnungsposition zu bringen, um den Schwerpunkt der Fahrerkabine 2 in Richtung zur Kippachse zu verlagern und dadurch die zum Kippen der Fahrerkabine 2 erforderliche Kraft herabzusetzen.

Sofern die Vertikalstrebe 5 durch eine Schraubverbindung mit der Fahrerkabine 2 verbunden wird, kann die Fahrerkabine 2 mit geringstmöglichem Aufwand wahlweise mit der oben beschrieben Tür 6 oder mit einer die Öffnung 3 vollständig abdeckenden Tür ausgerüstet werden.

## Patentansprüche

1. Fahrzeug mit einer auf einem Fahrzeugrahmen angeordneten Fahrerkabine, die eine durch eine Tür verschließbare seitliche Öffnung aufweist, wobei die Tür an einer hinteren Vertikalstrebe befestigt und zum Öffnen gegen den Uhrzeigersinn nach außen schwenkbar ist und wobei der Fahrzeugrahmen in einem einen Öffnungswinkel von 90 Grad übersteigenden Schwenkbereich der Tür - in Bezug auf die Vertikalposition des untersten Türabschnittes in Schließposition - zumindest teilweise in vertikaler Richtung nach oben versetzt ist und zumindest teilweise horizontal über die Kontur der Fahrerkabine hinausragt, **dadurch gekennzeichnet, dass** die Tür (6) an ihrem unteren Ende nach innen gekröpft und/oder mit einem hochklappbaren Abschnitt (6a) versehen ist.

2. Fahrzeug nach Anspruch 1, **dadurch gekennzeichnet, dass** die seitliche Öffnung (3) der Fahrerkabine (2) durch die Vertikalstrebe (5) in einen vorderen und einen hinteren Öffnungsabschnitt unterteilt ist, wobei der vordere Öffnungsabschnitt durch die an der Vertikalstrebe (5) angeschlagene Tür (6) verschließbar und der hintere Öffnungsabschnitt durch ein Fächenelement abgedeckt ist und wobei in der Öffnungsposition der Tür (6) der obere Teil der Tür (6) im Bereich des hinteren Öffnungsabschnitts zum Anschlag gegen die Fahrerkabine (2) bringbar ist.

3. Fahrzeug nach Anspruch 2, **dadurch gekennzeichnet, dass** die Fahrerkabine (2) um eine horizontale Kippachse (8) schwenkbar ist, die im Bereich des hinteren Öffnungsabschnitts unten quer angeordnet ist.

4. Fahrzeug nach Anspruch 2 oder 3, **dadurch gekennzeichnet, dass** die Vertikalstrebe (5) mittels Schraubverbindungen an der Fahrerkabine (2) befestigt ist.

5. Fahrzeug nach einem der Ansprüche 1 bis 4, **dadurch gekennzeichnet, dass** die Tür (6) in der Öffnungsstellung seitlich nicht aus der Kontur des Fahrzeugs herausragt.
